# EUROPÄISCHE PATENTSCHRIFT

(11) **EP 1 766 767 B1**
(45) Veröffentlichungstag und Bekanntmachung des Hinweises auf die Patenterteilung: **13.10.2010**
(21) Anmeldenummer: 05784710.5
(22) Anmeldetag: 11.07.2005
(51) Int. Cl.: H02M 7/42, H02M 3/00

(54) **VERFAHREN ZUM BETRIEB EINES WECHSELRICHTERS UND ANORDNUNG ZUR DURCHFÜHRUNG DES VERFAHRENS**
METHOD FOR OPERATING AN INVERTER, AND ARRANGEMENT FOR CARRYING OUT SAID METHOD
PROCEDE D'UTILISATION D'UN ONDULEUR ET DISPOSITIF DE MISE EN OEUVRE DE CE PROCEDE

(30) Priorität: 12.07.2004 AT 11782004
(43) Veröffentlichungstag der Anmeldung: 28.03.2007
(73) Patentinhaber: Siemens Aktiengesellschaft, 80333 München (DE)
(72) Erfinder: HALLAK, Jalal, A-1220 Wien (AT)
(74) Vertreter: Peham, Alois
(86) Internationale Anmeldenummer: PCT/EP2005/007486
(87) Internationale Veröffentlichungsnummer: WO 2006/005562

(56) Entgegenhaltungen:
- US-A- 5 969 484
- US-A1- 2002 097 011
- ITOH R ET AL: "SINGLE-PHASE SINUSOIDAL RECTIFIER WITH STEP-UP/DOWN CHARACTERISTICS" IEE PROCEEDINGS B. ELECTRICAL POWER APPLICATIONS, INSTITUTION OF ELECTRICAL ENGINEERS. STEVENAGE, GB, Bd. 138, Nr. 6 PART B, 1. November 1991 (1991-11-01), Seiten 338-344, XP000267844

## Beschreibung

Die Erfindung betrifft ein Verfahren zum Betrieb eines elektronisch gesteuerten Wechselrichters mit diversen Schaltungselementen, welche Halbleiterschalter mindestens eine Eingangsdrossel und mindestens eine Ausgangsdrossel, Kondensatoren und mindestens eine Diode umfassen und eine Anordnung zur Durchführung des Verfahrens.

Elektronisch gesteuerte Wechselrichter sind beispielsweise aus US-Z.:C.M. Penalver, u.a. "Microprocessor Control of DC/AC Static Converters"; IEEE Transactions on Industrial Electronics, Vol. IE-32, No.3, August 1985, S.186 -191; bekannt. Sie werden beispielsweise in Solaranlagen dazu eingesetzt, den durch die Sonnenzellen erzeugten Gleichstrom so umzuformen, dass eine Abgabe in das öffentliche Wechselstrom-Netz möglich ist. Erst damit ist eine praktisch uneingeschränkte Nutzung der solar produzierten Energie gewährleistet.

Die Vielzahl von Anwendungsmöglichkeiten für Wechselrichter hat unter anderem dazu geführt, die Grundtypen von Hochsetzsteller, Hochtiefsetzsteller und Tiefsetzsteller für spezielle Anwendungsfälle abzuwandeln. Als Beispiel sei hier eine Veröffentlichung in der Zeitschrift EDN vom 17. Okt. 2002 "Slave converters power auxiliary outputs", Sanjaya Maniktala; angeführt, in der verschiedene Kombinationsmöglichkeiten von Wechselrichter-Grundtypen beschrieben werden.

Der Einsatz eines CUK-Konverters in einem Wechselrichter ist in der US 5 969 484 A beschrieben. Dabei werden aus einer gleichchgerichteten Wechselspannung zunächst Halbwellen höherer Frequenz erzeugt, wobei mittels einer nachgeschalteten Vollbrücke jede zweite Halbwelle umgepolt wird. Die Schaltungselemente des Wechselrichters führen dabei stets die Funktion eines CUK-Konverters aus, während eine fortlaufende Umpolung einer angeschlossen Last erfolgt.

Der Erfindung liegt die Aufgabe zugrunde, die aus dem Stand der Technik bekannten Wechselrichter weiterzubilden.

Erfindungsgemäß wird die Aufgabe gelöst mit einem Verfahren der eingangs genannten Art, bei dem die mindestens eine Ausgangsdrossel und die mindestens eine Diode des Wechselrichters mittels der Halbleiterschalter alternierend mit einem Ausgangsnulleiter verbunden werden und als Element eines SEPIK-Wandlers bzw. eines CUK-Konverters wirken, wobei der Ausgangsnulleiter (N) mit einem eingangsseitigen negativen Pol verbunden ist und der Wechselrichter während der positiven Halbwelle der Ausgangswechselspannung so angesteuert wird, dass die Schaltungselemente die Funktion eines SEPIK-Wandlers ausführen und bei dem der Wechselrichter während der negativen Halbwelle der Ausgangswechselspannung so angesteuert wird, dass die Schaltungselemente die Funktion eines CUK-Konverters ausführen.

Die erfindungsgemäße Kombination der Funktionen von SEPIK-Wandlers und CUK-Konverter führt zu einem besonders verlustarmen Wechselrichter, der damit auch einen hohen Wirkungsgrad aufweist und daher insbesondere für den Einsatz in Solaranlagen besonders geeignet ist.

Vorteilhaft ist es, wenn der Wechselrichter eine aus erstem, zweitem, drittem und viertem Halbleiterschalter gebildete Halbleiterbrückenschaltung umfasst, deren erster Ausgang mit einem ersten Anschluss eines Wechselspannungsausganges des Wechselrichters verbunden ist, deren zweiter Ausgang mit einem zweiten Anschluss des Wechselspannungsausganges des Wechselrichters verbunden ist, wenn weiterhin eine erste Drossel vorgesehen ist, deren erste Seite mit dem positiven Pol einer Gleichspannungsquelle verbunden ist und deren zweite Seite über einen fünften Halbleiterschalter mit dem negativen Pol der Gleichspannungsquelle verbunden ist, wenn die Verbindung zwischen erster Drossel und fünftem Halbleiterschalter über einen ersten Kondensator mit dem ersten Anschluss einer zweiten Drossel und der Anode einer Diode verbunden ist, wenn der zweite Anschluss der zweiten Drossel mit einem ersten Eingang der Brückenschaltung verbunden ist und die Kathode der Diode mit einem zweiten Eingang der Brückenschaltung verbunden ist und wenn der negativen Pol der Gleichspannungsquelle mit dem zweiten Anschluss des Wechselspannungsausganges verbunden ist.

Vorteilhaft ist es weiterhin, wenn mittels Mikrocontroller während der positiven Halbwelle der Ausgangswechselspannung der zweite und dritte Halbleiterschalter permanent eingeschaltet und der erste und vierte Halbleiterschalter permanent ausgeschaltet werden und der fünfte Halbleiterschalter gepulst geschaltet wird, und wenn während der negativen Halbwelle der Ausgangswechselspannung erster und vierter Halbleiterschalter dauerhaft eingeschaltet und zweiter und dritter Halbleiterschalter dauerhaft ausgeschaltet werden und der fünfte Halbleiterschalter gepulst geschaltet wird.

Günstig ist es, wenn ein Mikrocontroller vorgesehen ist, welcher zur Steuerung der Halbleiterschalter entsprechend programmiert ist.

Die Erfindung wird anhand von Figuren näher erläutert. Es zeigen beispielhaft:
Fig.1 den Schaltplan eines beispielhaften Wechselrichters
Fig. 2 den Schaltplan eines beispielhaften Wechselrichters bei Verwendung von n-Kanal Sperrschicht MOSFETs.
Fig.3 und 4 Stromfluß und Schaltzustände in einem beispielhaften Wechselrichter während der positiven Halbwelle der Ausgangswechselspannung,
Fig.5 und 6 Stromfluß und Schaltzustände in einem beispielhaften Wechselrichter während der negativen Halbwelle der Ausgangswechselspannung und
Fig.7 den zeitlichen Verlauf beispielhafter Ansteuersignale für die Halbleiterschalter.

Der in den Figuren dargestellte Wechselrichter umfasst eine aus erstem, zweitem, drittem und viertem Halbleiterschalter S1, S2, S3, S4 gebildete Halbleiterbrückenschaltung.
Der aus der Verbindung von erstem und zweitem Halbleiterschalter S1, S2 gebildete erste Ausgang der Halbleiterbrückenschaltung ist mit einem ersten Anschluss eines Wechselspannungsausganges U_{OUT} des Wechselrichters verbunden. Der aus der Verbindung von drittem und viertem Halbleiterschalter S3, S4 gebildete zweite Ausgang der Halbleiterbrückenschaltung ist mit einem zweiten Anschluss des Wechselspannungsausganges U_{OUT} des Wechselrichters verbunden. Weiterhin ist eine erste Drossel L1 vorgesehen, deren erste Seite mit dem positiven Pol einer Gleichspannungsquelle U_{IN} verbunden und deren zweite Seite über einen fünften Halbleiterschalter S5 mit dem negativen Pol der Gleichspannungsquelle U_{IN} verbunden ist. Die Verbindung zwischen erster Drossel L1 und fünftem Halbleiterschalter S5 ist über einen ersten Kondensator C_{C} mit dem ersten Anschluss einer zweiten Drossel L2 und der Anode einer Diode D1 verbunden und der zweite Anschluss der zweiten Drossel L2 an einen, durch die Verbindung von erstem und drittem Halbleiterschalter S1, S3 gebildeten ersten Eingang der Brückenschaltung S1, S2, S3, S4 angeschlossen.

Erste und zweite Drossel L1, L2 können einen gemeinsamen Kern aufweisen.

Die Kathode der Diode D1 ist mit einem durch die Verbindung von zweitem und viertem Halbleiterschalter S2, S4 gebildeten zweiten Eingang der Brückenschaltung S1, S2, S3, S4 verbunden Weiterhin ist der negativen Pol der Gleichspannungsquelle U_{IN} mit dem zweiten Anschluss des Wechselspannungsausganges U_{OUT} verbunden.

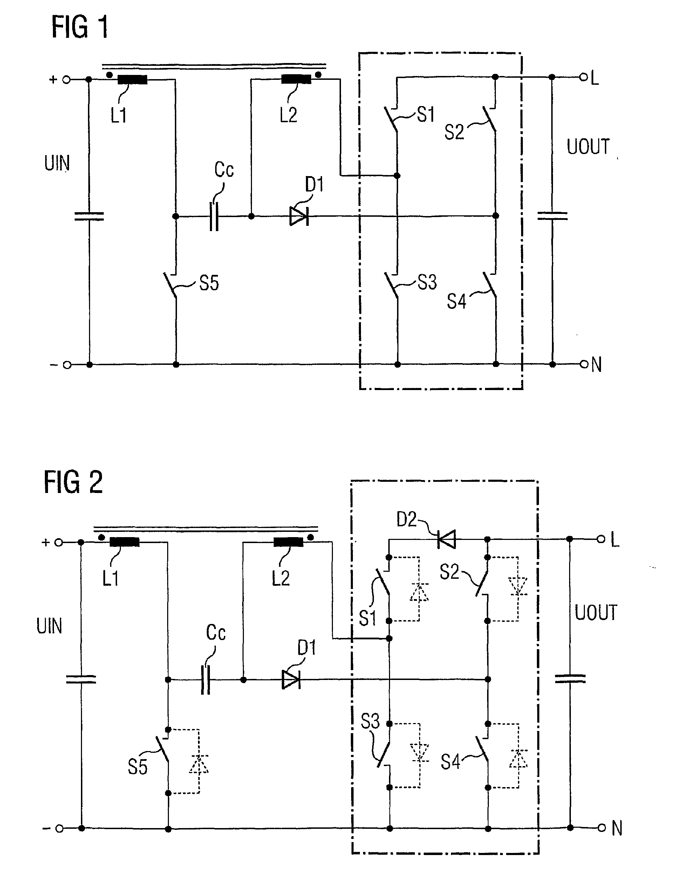

Bei Verwendung von n-kanal Sperrschicht MOSFET als Halbleiterschalter S1, S2, S3, S4 ,S5 ist die Einbaurichtung zu beachten, die in Fig. 2 durch die strichliert dargestellten Diodensymbole angedeutet ist.

Bei dieser Ausgestaltung der Erfindung ist der Einsatz einer Diode D2 zweckmäßig, deren Funktion allerdings auch durch eine entsprechende Ansteuerung der Halbleiterschalter realisiert werden kann.

Mittels (nicht dargestelltem) Mikrocontroller werden die Halbleiterschalter angesteuert.

Dabei werden erfindungsgemäß während der positiven Halbwelle der Ausgangswechselspannung der zweite und dritte Halbleiterschalter S2, S3 permanent eingeschaltet und der erste und vierte Halbleiterschalter S1, S4 permanent ausgeschaltet während der fünfte Halbleiterschalter S5 gepulst geschaltet wird.

Während der negativen Halbwelle der Ausgangswechselspannung werden erster und vierter Halbleiterschalter S1,S4 dauerhaft eingeschaltet und zweiter und dritter Halbleiterschalter S2, S3 dauerhaft ausgeschaltet und der fünfte Halbleiterschalter S5 gepulst geschaltet.

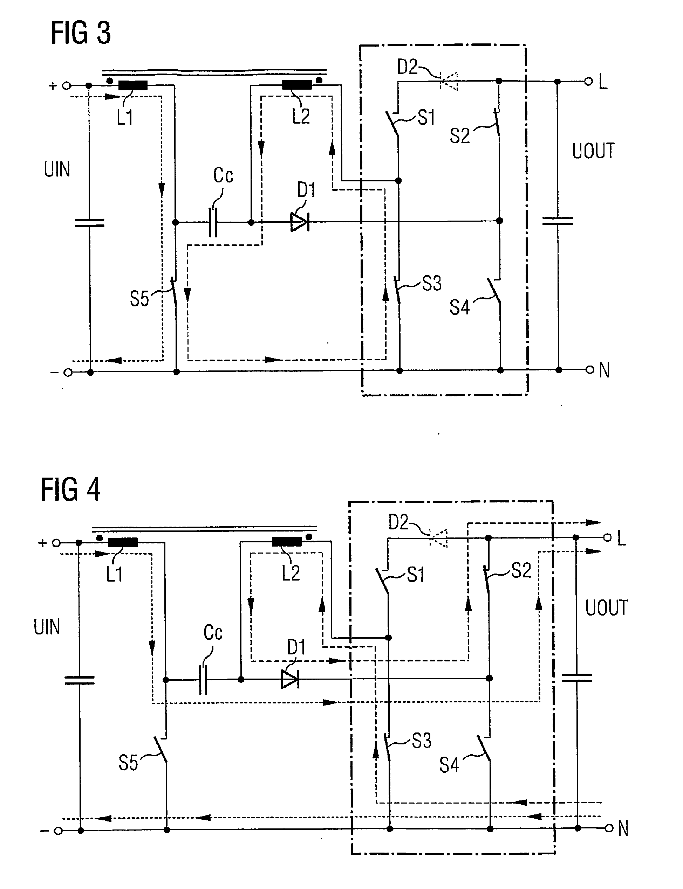

Fig.3 zeigt dabei den Zustand, in dem der Wechselrichter während einer positiven Halbwelle der Ausgangsspannung elektrische Energie aus der Gleichspannungsquelle U_{IN} aufnimmt. Dazu ist der fünfte Halbleiterschalter S5 geschlossen und damit ein Strompfad zwischen dem positiven Pol der Gleichspannungsquelle U_{IN} über die erste Drossel L1 und den ersten Halbleiterschalter S1, gegeben. Ein zweiter Stromkreis wird durch die im Kondensator Cc gespeicherte Energie über den fünften und den dritten Halbleiterschalter S5 und S3 und die zweite Spule L2 erzwungen.

In diesem Zustand speichert die Drossel L1 Energie, die - wie in Fig. 4 dargestellt - nach dem Öffnen des fünften Halbleiterschalters S5 über die erste Halbleiterdiode D1 und die Halbleiterbrückenschaltung an den Wechselspannungsausgang UOUT und gleichzeitig an den ersten Kondensator Cc abgegeben wird.

Die in der zweiten Drossel L2 gespeicherte Energie wird nach dem Öffnen des fünften Halbleiterschalters S5 über Halbleiterdiode D1 und über die Halbleiterbrückenschaltung an den Wechselspannungsausgang UOUT abgegeben.

Die dabei entstehenden Stromkreise verlaufen einerseits vom positiven Pol der Gleichspannungsquelle U_{IN} über die erste Drossel L1, den ersten Kondensator Cc, die Diode D1, den zweiten Halbleiterschalter S2 an den Wechselspannungsausgang U_{OUT} und über das Wechselspannungsnetz zum negativen Pol der Gleichspannungsquelle U_{IN} und andererseits von der zweiten Drossel L2 über die Diode D1 und den zweiten Halbleiterschalter S2 an den Wechselspannungsausgang U_{OUT} und über das Wechselspannungsnetz und den dritten Halbleiterschalter S3 zurück zur zweiten Drossel L2.

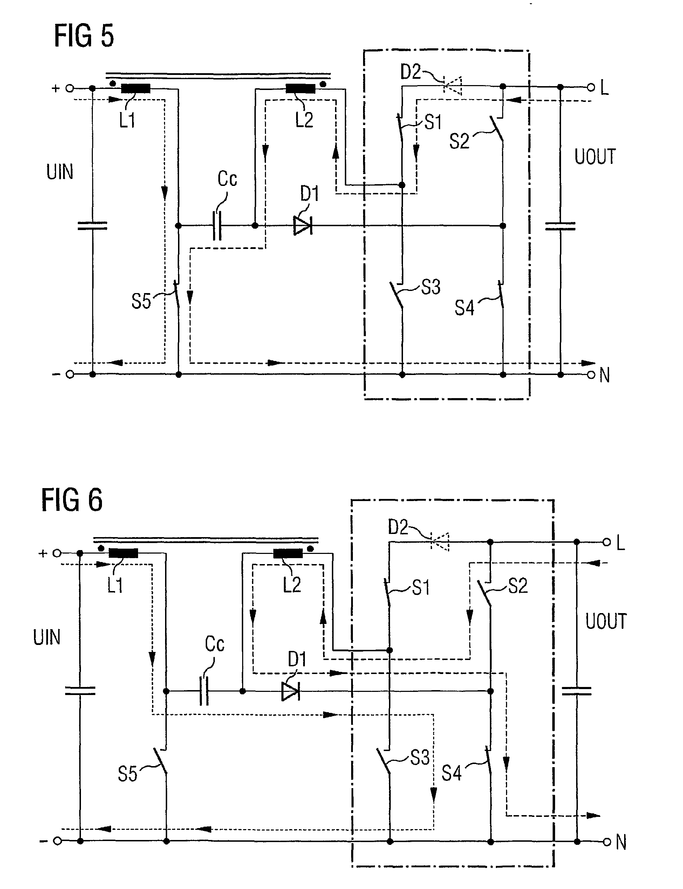

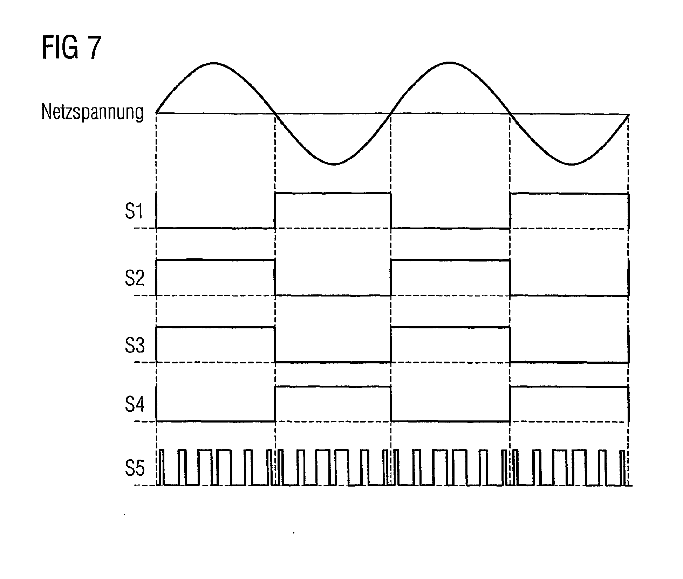

Anhand der Fig. 5 und Fig. 6 werden nun die Schaltzustände während der negativen Halbwelle der Ausgangswechselspannung erläutert. Wie auch aus der Fig. 7 ersichtlich, wird in diesem Zeitraum der fünfte Halbleiterschalter S5 gepulst geschaltet, der erste und der dritte Halbleiterschalter S1,S3 dauerhaft eingeschaltet und zweite und der vierte Halbleiterschalter S2, S4 dauerhaft ausgeschaltet. Damit wird erfindungsgemäß während der negativen Halbwelle der Ausgangswechselspannung die Funktion eines sogenannten CUK-Konverters ausgeführt.

Fig.5 zeigt dabei die Verhältnisse, wenn der fünfte Halbleiterschalter S5 geschlossen ist. Es bildet sich ein Strompfad zwischen dem positiven Pol der Gleichspannungsquelle U_{IN} über die erste Drossel L1 und den fünften Halbleiterschalter S5 zum negativen Pol der Gleichspannungsquelle und ein zweiter Strompfad über die zweite Drossel L2, ersten Kondensator Cc, den fünften Halbleiterschalter S5, das Ausgangswechselspannungsnetz U_{OUT} und den ersten Halbleiterschalter S1.

Im nächsten Schaltvorgang wird - wie in Fig. 6 dargestellt - der fünfte Halbleiterschalter S5 geöffnet.

Die sich daraus ergebenden Stromkreise verlaufen einerseits vom positiven Pol der Gleichspannungsquelle U_{IN} über die erste Drossel L1, den ersten Kondensator Cc, die Diode D1 und den vierten Halbleiterschalter S4 zum negativen Pol der Gleichspannungsquelle U_{IN} und andererseits über die zweite Drossel L2, die Diode D1, den vierten Halbleiterschalter S4, das Ausgangswechselspannungsnetz U_{OUT} und den ersten Halbleiterschalter S1.

In Fig. 7 ist der beispielhafte Verlauf der Steuersignale für die Halbleiterschalter S1, S2, S3, S4 und S5 dargestellt.

## Patentansprüche

1. Verfahren zum Betrieb eines elektronisch gesteuerten Wechselrichters mit diversen Schaltungselementen, welche Halbleiterschalter (S1, S2, S3, S4, S5), mindestens eine Eingangsdrossel (L1) und mindestens eine Ausgangsdrossel (L2), Kondensatoren (C1, C2) und mindestens eine Diode (D1) umfassen, **dadurch gekennzeichnet, dass** die mindestens eine Ausgangsdrossel (L2) und die mindestens eine Diode (D1) des Wechselrichters mittels der Halbleiterschalter (S1, S2, S3, S4) alternierend mit einem Ausgangsnulleiter (N) verbunden werden und als Element eines SEPIK-Wandlers bzw. eines CUK-Konverters wirken, wobei der Ausgangsnulleiter (N) mit einem eingangsseitigen negativen Pol verbunden ist, und dass die Halbleiterschalter des Wechselrichters während der positiven Halbwelle der Ausgangswechselspannung so angesteuert werden, dass die diversen Schaltungselemente die Funktion eines SEPIK-Wandlers ausführen und bei dem die Halbleiterschalter des Wechselrichters während der negativen Halbwelle der Ausgangswechselspannung so angesteuert werden, das die diversen Schaltungselemente die Funktion eines CUK-Konverters ausführen.

2. Verfahren nach Anspruch 1, **dadurch gekennzeichnet, dass** der Wechselrichter eine aus erstem, zweitem, drittem und viertem Halbleiterschalter (S1, S2, S3, S4) gebildete Halbleiterbrückenschaltung umfaßt, deren erster Ausgang mit einem ersten Anschluss eines Wechselspannungsausganges (U_{OUT}) des Wechselrichters verbunden ist, deren zweiter Ausgang mit einem zweiten Anschluss des Wechselspannungsausganges (U_{OUT}) des Wechselrichters verbunden ist, dass weiterhin eine erste Drossel (L1) vorgesehen ist, deren erste Seite mit dem positiven Pol einer Gleichspannungsquelle (U_{IN}) verbunden ist und deren zweite Seite über einen fünften Halbleiterschalter (S5) mit dem negativen Pol der Gleichspannungsquelle (U_{IN}) verbunden ist, dass die Verbindung zwischen erster Drossel (L1) und fünftem Halbleiterschalter (S5)über einen ersten Kondensator(C_{C})mit dem ersten Anschluss einer zweiten Drossel(L2)und der Anode einer Diode (D1) verbunden ist, dass der zweite Anschluss der zweiten Drossel (L2) mit einem ersten Eingang der Brückenschaltung (S1, S2, S3, S4) verbunden ist und die Kathode der Diode (D1) mit einem zweiten Eingang der Brückenschaltung (S1, S2, S3, S4) verbunden ist und dass der negativen Pol der Gleichspannungsquelle (U_{IN}) mit dem zweiten Anschluss des Wechselspannungsausganges (U_{OUT}) verbunden ist.

3. Verfahren nach Anspruch 2, **dadurch gekennzeichnet, dass** mittels Mikrocontroller während der positiven Halbwelle der Ausgangswechselspannung der zweite und dritte Halbleiterschalter (S2, S3)permanent eingeschaltet und der erste und vierte Halbleiterschalter (S1, S4)permanent ausgeschaltet werden und der fünfte Halbleiterschalter (S5)gepulst geschaltet wird, und dass während der negativen Halbwelle der Ausgangswechselspannung erster und vierter Halbleiterschalter (S1,S4) dauerhaft eingeschaltet und zweiter und dritter Halbleiterschalter (S2, S3) dauerhaft ausgeschaltet werden und der fünfte Halbleiterschalter (S5) gepulst geschaltet wird.

4. Wechselrichter zur Durchführung der Verfahren nach einem der Ansprüche 1 bis 3, **dadurch gekennzeichnet, dass** ein Mikrocontroller vorgesehen ist, welcher zur Steuerung der Halbleiterschalter entsprechend programmiert ist.

## Claims

1. Method for operating an electronically controlled inverter having various circuit elements, which include semiconductor switches (S1, S2, S3, S4, S4), at least one input choke (L1) and at least one output choke (L2), capacitors (C1, C2) and at least one diode (D1), **characterised in that** the at least one output choke (L2) and the at least one diode (D1) of the inverter is alternately connected to an output zero conductor (N) by means of the semiconductor switches (S1, S2, S3, S4) and acts as an element of a SEPIC converter and/or a Cuk converter, with the output zero conductor (N) being connected to a negative pole on the input side and that the semiconductor switches of the inverter are controlled during the positive half-wave of the output alternating current so that the various circuit elements execute the function of a SEPIC converter while during the negative half-wave of the output alternating current the semiconductor switches of the inverter are controlled so that the various circuit elements execute the function of a CUK converter.

2. Method according to claim 1, **characterised in that** the inverter comprises a semiconductor bridge circuit formed from a first, second, third and fourth semiconductor switch (S1, S2, S3, S4), of which the first output is connected to a first terminal of an alternating current output (U_{OUT}) of the inverter, of which the second output is connected to a second terminal of the alternating current output (U_{OUT}) of the inverter, that further a first choke (L1) is provided of which the first side is connected to the positive pole of a direct current source (U_{IN}) and of which the second side is connected via a fifth semiconductor switch (S5) to the negative pole of the direct current source (U_{IN}), that the connection between first choke (L1) and fifth semiconductor switch (S5) is made via a first capacitor (C_{C}) to the first terminal of a second choke (L2) and to the anode of a diode (D1), that the second terminal of the second choke (L2) is connected to a first input of the bridge circuit (S1, S2, S3, S4) and the cathode of the diode (D1) is connected to a second input of the bridge circuit (S1, S2, S3, S4) and that the negative pole of the direct current source (U_{IN}) is connected to the second terminal of the alternating current output (U_{OUT}).

3. Method according to claim 2, **characterised in that** the second and third semiconductor switches (S2, S3) are permanently switched on and the first and fourth semiconductor switches (S1, S4) are permanently switched off by means of microcontrollers during the positive half-wave of the output alternating current and the fifth semiconductor switch (S5) is switched pulsed, and that during the negative half-wave of the output alternating current, first and fourth semiconductor switches (S1, S4) are permanently switched on and second and third semiconductor switches (S2, S3) are permanently switched off and the fifth semiconductor switch (S5) is switched pulsed.

4. Inverter for executing the method according to one of the claims 1 to 3, **characterised in that** a microcontroller is provided which is programmed appropriately for controlling the semiconductor switches.

## Revendications

1. Procédé pour faire fonctionner un onduleur commandé électroniquement et ayant divers éléments de circuit, qui comprennent des interrupteurs (S1, S2, S3, S4, S5) à semiconducteur, au moins une bobine ( L1 ) d'entrée et au moins une bobine ( L2 ) de sortie, des condensateurs ( C1, C2 ) et au moins une diode ( D1 ), **caractérisé en ce que** la au moins une bobine ( L2 ) de sortie et la au moins une diode ( D1 ) de l'onduleur sont reliées au moyen des interrupteurs ( S1, S2, S3, S4 ) à semiconducteur en alternance avec un conducteur ( N ) neutre de sortie et servent d'éléments d'un convertisseur SEPIC ou d'un convertisseur CUC, le conducteur ( N ) de sortie étant relié à un pôle négatif du côté de l'entrée, et **en ce que** les interrupteurs à semiconducteur de l'onduleur sont commandés pendant la demi-onde positive de la tension alternative de sortie, de manière à ce que les divers éléments de circuit réalisent la fonction d'un convertisseur SEPIC et dans lequel les interrupteurs à semiconducteur de l'onduleur sont commandés pendant la demi-onde négative de la tension alternative de sortie, de manière à ce que les divers éléments de circuit réalisent la fonction d'un convertisseur CUC.

2. Procédé suivant la revendication 1, **caractérisé en ce que** l'onduleur comprend un circuit en pont à semiconducteur, qui est formé d'un premier, d'un deuxième, d'un troisième et d'un quatrième interrupteurs ( S1, S2, S3, S4 ) à semiconducteur, dont la première sortie est reliée à une première borne ( U_{OUT} ) de tension alternative de l'onduleur et dont la deuxième sortie est reliée à une deuxième borne de la sortie ( U_{OUT} ) de l'onduleur, **en ce qu'**en outre il est prévu une première bobine ( L1 ), dont le premier côté est relié au pôle positif d'une source ( U_{IN} ) de tension continue et dont le deuxième côté est relié par un cinquième interrupteur ( S5 ) à semiconducteur au pôle négatif de la source ( U_{IN} ) de tension continue, **en ce que** la liaison entre la première bobine ( L1 ) et le cinquième interrupteur ( S5 ) à semiconducteur est reliée par l'intermédiaire d'un premier condensateur ( Cc ) à la première borne d'une deuxième bobine ( L2 ) et de l'anode d'une diode ( D1 ), **en ce que** la deuxième diode de la deuxième bobine ( L2 ) est reliée à une première entrée du circuit ( S1, S2, S3, S4 ) en pont et la cathode de la diode ( D1 ) est reliée à une deuxième entrée du circuit ( S1, S2, S3, S4 ) en pont et **en ce que** le pôle négatif de la source ( U_{IN} ) de tension continue est relié à la deuxième borne ( U_{OUT} ) de tension alternative.

3. Procédé suivant la revendication 2, **caractérisé en ce que** l'on ferme d'une manière permanente, au moyen d'un microcontrôleur avant la demi-onde de la tension alternative de sortie, le deuxième et le troisième interrupteurs ( S2, S3 ) à semiconducteur et on ouvre le premier et le quatrième interrupteurs ( S1, S4 ) à semiconducteur et on monte de manière pulsée le cinquième interrupteur ( S5 ) à semiconducteur et **en ce que**, pendant la demi-onde négative de la tension alternative de sortie, on ferme de manière durable le premier et le quatrième interrupteurs ( S1, S4 ) et on ouvre de manière durable le deuxième et le troisième interrupteurs ( S2, S3 ) à semiconducteur et on monte de manière pulsée le cinquième interrupteur ( S5 ) à semiconducteur.

4. Onduleur pour la mise en oeuvre du procédé suivant l'une des revendications 1 à 3, **caractérisé en ce qu'**il est prévu un microcontrôleur, qui est programmé pour commander en conséquence les interrupteurs à semiconducteur.
